# EUROPEAN PATENT APPLICATION

(11) **EP 4 471 889 A2**
(43) Date of publication of application: **04.12.2024**
(21) Application number: 24178871.0
(22) Date of filing: 29.05.2024
(51) Int. Cl.: H01M 4/131, H01M 4/505, H01M 4/525

(54) **POSITIVE ELECTRODE COMPOSITION, POSITIVE ELECTRODE AND RECHARGEABLE LITHIUM BATTERIES**

(30) Priority: 02.06.2023 KR 20230071909
(71) Applicant: Samsung SDI Co., Ltd., Yongin-si, Gyeonggi-do 17084 (KR)
(72) Inventor: KIM, Hyunwoo, 17084 Yongin-si (KR); CHO, Youngkwang, 17084 Yongin-si (KR); HAN, Seung-Hun, 17084 Yongin-si (KR); KIM, Jinhee, 17084 Yongin-si (KR); KIM, Soochan, 17084 Yongin-si (KR)
(74) Representative: Marks & Clerk LLP

(57) **Abstract**

A positive electrode composition for a rechargeable lithium battery, a positive electrode including the positive electrode composition, and a rechargeable lithium battery including the positive electrode are disclosed. The positive electrode composition includes a positive electrode active material, a binder, a metal oxide having an oxidation number of 4 or higher, and an organic acid.

## Description

### BACKGROUND

### 1. Field

One or more embodiments of the present disclosure relate to positive electrode compositions, positive electrodes, and rechargeable lithium batteries.

### 2. Description of the Related Art

A portable information device, such as a cell phone, a laptop, a smart phone, and/or the like or an electric vehicle, has utilized a rechargeable lithium battery having relatively high energy density and easy portability as a driving power source. Recently, research has been actively conducted to utilize a rechargeable lithium battery with high energy density as a driving power source or a power storage power source for hybrid or electric vehicles.

As a low-cost and high-capacity energy storage device is highly in demand and desired, a positive electrode capable of realizing relatively high capacity and high energy density is being developed and researched. However, a high-capacity positive electrode active material may have a problem in that lithium is eluted from the inside of the positive electrode active material during a battery manufacturing process and reacts with the atmosphere to additionally form a lithium compound on the positive electrode active material surface. If (e.g., when) the lithium inside the positive electrode active material is eluted, there may be a problem of reducing available capacity and also, increasing resistance due to formation of the lithium compound on the positive electrode active material surface. In addition, in order to manufacture a positive electrode plate with relatively high energy density, a fluorine-based binder, etc. may be added to increase adherence of particles, but as the fluorine-based binder may be deformed, the gelation of a positive electrode composition occurs, resulting in a decrease in a process yield.

### SUMMARY

One or more aspects of embodiments of the present disclosure are directed toward a positive electrode composition, a positive electrode, and a rechargeable lithium battery including the positive electrode composition, which not only reduces denaturation of the binder, but also prevents or reduces the elution of lithium inside the positive electrode active material during an electrode plate manufacturing process by lowering the pH (level) of the positive electrode composition, and suppresses the formation of additional lithium compounds during the process, thus preventing or reducing binder denaturation and gelation of the positive electrode composition, and effectively overcoming or suppressing the problem of capacity deterioration caused by a decrease in reversible lithium (e.g., caused by a decrease in an amount of reversible lithium).

Additional aspects will be set forth in part in the description which follows and, in part, will be apparent from the description, or may be learned by practice of the presented embodiments.

According to one or more embodiments of the present disclosure, a positive electrode composition for a rechargeable lithium battery includes a positive electrode active material, a binder, a metal oxide having an oxidation number of 4 or higher, and an organic acid.

According to one or more embodiments of the present disclosure, a positive electrode for a rechargeable lithium battery includes a positive electrode current collector and a positive electrode active material layer on the positive electrode current collector, wherein the positive electrode active material layer includes a positive electrode active material, a binder, a metal oxide having an oxidation number of 4 or higher, and an organic acid.

According to one or more embodiments of the present disclosure, a rechargeable lithium battery includes the positive electrode, a negative electrode, and an electrolyte.

At least some of the above and other features of the invention are set out in the claims.

The positive electrode composition not only reduces denaturation of the binder, but also prevents the elution of lithium inside the positive electrode active material during an electrode plate manufacturing process by lowering the pH of the positive electrode composition, and suppresses the formation of additional lithium compounds during the process, thus preventing or reducing binder denaturation and gelation of the positive electrode composition, and effectively suppressing the problem of capacity deterioration caused by a decrease in reversible lithium (e.g., a decrease in an amount of reversible lithium).

### BRIEF DESCRIPTION OF THE DRAWINGS

The above and other aspects, features, and advantages of certain embodiments of the present disclosure will be more apparent from the following description taken in conjunction with the accompanying drawings.
FIGs. 1-4 are each a cross-sectional view schematically showing a rechargeable lithium battery according to one or more embodiments of the present disclosure.
FIG. 5 is a graph showing a change in viscosity according to a leaving date for positive electrode compositions of Comparative Examples 1 to 3.
FIG. 6 is a graph showing a change in viscosity according to a leaving date for positive electrode compositions of Examples 1 to 5 according to one or more embodiments of the present disclosure.
FIG. 7 is a graph showing capacity changes of rechargeable lithium batteries respectively manufactured immediately after preparing the positive electrode composition of Comparative Example 2 and after leaving it for 3 days, and immediately after preparing the positive electrode composition of Example 1 and after leaving it for 6 days according to one or more embodiments of the present disclosure.
FIG. 8 is X-ray diffraction (XRD) analysis graphs for positive electrode active materials of Comparative Example 1 and Example 1 immediately after and 3 days after preparation according to one or more embodiments of the present disclosure.
FIG. 9 is a graph showing a pH change according to the addition of an organic acid and/or a metal oxide to a positive electrode active material according to one or more embodiments of the present disclosure.

### DETAILED DESCRIPTION

Hereinafter, example embodiments will be described in more detail so that those of ordinary skill in the art may easily implement them. However, the present disclosure may be embodied in many different forms and is not construed as limited to the example embodiments set forth herein.

The terminology utilized herein is utilized to describe embodiments only, and is not intended to limit the present disclosure. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As utilized herein, "combination thereof" may refer to a mixture, laminate, composite, copolymer, alloy, blend, reaction product, and/or the like of the constituents.

Herein, it should be understood that terms such as "comprise(s)/comprising," "include(s)/including," or "have/has/having" are intended to designate the presence of an embodied feature, number, step, element, or a combination thereof, but it does not preclude the possibility of the presence or addition of one or more other features, numbers, steps, elements, or any combination thereof.

In the drawings, the thickness of layers, films, panels, regions, etc., may be exaggerated for clarity and like reference numerals designate like elements throughout the present disclosure, and duplicative descriptions thereof may not be provided for conciseness. It will be understood that when an element such as a layer, film, region, or substrate is referred to as being "on" another element, it may be directly on the other element or intervening elements may also be present. In contrast, when an element is referred to as being "directly on" another element, there are no intervening elements present.

In some embodiments, "layer" herein may include not only a shape or layer formed on the whole surface when viewed from a plan view, but also a shape or layer formed on a partial surface.

In one or more embodiments, an average particle diameter may be measured by a method well suitable (known) to those skilled in the art, for example, may be measured by a particle size analyzer, for example, HORIBA, LA-950 laser particle size analyzer, or may be measured by a transmission electron microscope (TEM) or a scanning electron microscope (SEM). In some embodiments, it may obtain an average particle diameter value by measuring it utilizing a dynamic light scattering method, performing data analysis, counting the number of particles for each particle size range, and calculating from the data. Unless otherwise defined, the average particle diameter may refer to a diameter (D₅₀) of particles having a cumulative volume of 50 volume% in a particle size distribution. D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In one or more embodiments, as utilized herein, when a definition is not otherwise provided, the average particle diameter refers to a diameter (D₅₀) of particles having a cumulative volume of 50 volume% in the particle size distribution that is obtained by measuring the size (diameter or length of the major axis) of about 20 particles at random in a scanning electron microscope image. In the present disclosure, when particles are spherical, "diameter" indicates an average particle diameter, and when the particles are non-spherical, the "diameter" indicates a major axis length.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As utilized herein, the term "metal" is interpreted as a concept that includes ordinary metals, transition metals, and metalloids (semi-metals).

### Positive Electrode Composition

In one or more embodiments, a positive electrode composition for a rechargeable lithium battery includes a positive electrode active material, a binder, a metal oxide having an oxidation number of 4 or higher, and an organic acid. The positive electrode composition not only suppresses denaturation of the binder by lowering the pH due to the organic acid, but also effectively suppresses the problem of lithium elution within the positive electrode active material by including a tetravalent or higher metal oxide, thereby preventing or reducing the formation of additional lithium compounds. Accordingly, it may further prevent or reduce denaturation of the binder, effectively prevent or reduce gelation of the positive electrode composition, and even solve or overcome the problem of capacity deterioration due to a decrease in reversible lithium (e.g., due to a decrease in an amount of reversible lithium).

### Metal Oxide

The metal oxide according to one or more embodiments is not particularly limited as long as it is an oxide including a metal having an oxidation number of 4 or more, for example, MoOs, V₂O₅, WO₃, KMnO₄, Nb₂O₅, Sb₂O₅, As₂O₅, SiO₂, MnO₂, SnO₂, ZnO₂, MoO₂, RuO₂, TiO₂, or any combination thereof. For example, the oxide including a metal having an oxidation number of 4 or more may be, for example, MoOs, V₂O₅, WOs, KMnO₄, SiO₂, or any combination thereof.

For example, in one or more embodiments, the metal oxide may be a metal oxide having an oxidation number of 5 or higher. The metal oxide having an oxidation number of 5 or higher may include, for example, MoOs, V₂O₅, WO₃, KMnO₄, Nb₂O₅, Sb₂O₅, As₂O₅, or any combination thereof. The metal oxide having a high oxidation number of 5 or higher may effectively suppress or reduce the problem of elution of internal lithium of the positive electrode active material within the positive electrode composition and effectively prevent or reduce denaturation of the binder and subsequent gelation of the positive electrode composition.

In one or more embodiments, the metal oxide may be included in an amount of about 0.01 wt% to about 0.5 wt%, for example, about 0.01 wt% to about 0.4 wt%, about 0.01 wt% to about 0.3 wt%, about 0.01 wt% to about 0.2 wt%, about 0.01 wt% to about 0.1 wt%, about 0.01 wt% to about 0.09 wt%, about 0.02 wt% to about 0.5 wt%, about 0.03 wt% to about 0.5 wt%, about 0.04 wt% to about 0.5 wt%, or about 0.05 wt% to about 0.5 wt%, based on a total weight, 100 wt%, of the positive electrode composition. By including the metal oxide within the above content (e.g., amount) range, gelation of the positive electrode composition and capacity deterioration may be effectively suppressed or reduced without reducing capacity or causing side effects.

### Organic Acid

The organic acid is not particularly limited, but may include, for example, formic acid, acetic acid, propionic acid, butyric acid, valeric acid, caproic acid, pelargonic acid, capric acid, caprylic acid, lauric acid, myristic acid, palmitic acid, stearic acid, fluoroacetic acid, trifluoroacetic acid, chloroacetic acid, dichloroacetic acid, bromoacetic acid, iodoacetic acid, hydroxyacetic acid, methoxyacetic acid, cyanoacetic acid, 2-chlorobutanoic acid, 3-chlorobutanoic acid, 3-butenoic acid, oxalic acid, malonic acid, succinic acid, glutaric acid, adipic acid, pimelic acid, suberic acid, azelaic acid, sebacic acid, maleic acid, fumaric acid, or any combinations thereof. For example, the organic acid may be oxalic acid.

In one or more embodiments, the organic acid may be included in an amount of about 0.01 wt% to about 1 wt%, for example, about 0.01 wt% to about 0.9 wt%, about 0.01 wt% to about 0.7 wt%, about 0.01 wt% to about 0.5 wt%, about 0.01 wt% to about 0.3 wt%, about 0.01 wt% to about 0.1 wt%, about 0.05 wt% to about 1 wt%, or about 0.1 wt% to about 1 wt% based on a total weight, 100 wt%, of the positive electrode composition. If (e.g., when) the organic acid is included in the above content (e.g., amount) range, processability may be improved by suppressing deformation/denaturation of the binder and preventing or reducing gelation of the positive electrode composition without adversely affecting the positive electrode composition.

A weight ratio of the metal oxide and the organic acid may be about 1:1 to about 1:10, for example, about 1:2 to about 1:10, about 1:1 to about 1:8, about 1:1 to about 1:6, about 1:1 to about 1:4, or about 1:1 to about 1:3. If (e.g., when) the weight ratio of the metal oxide and the organic acid satisfies the above range, the elution of lithium inside the positive electrode active material and the formation of lithium compounds on the surface of the positive electrode active material are effectively suppressed or reduced, thereby maximizing or increasing the effect of preventing or reducing gelation of the positive electrode composition.

### Positive Electrode Active Material

The positive electrode active material is not particularly limited as long as it is a positive electrode active material utilized in rechargeable lithium batteries, and may include, for example, a lithium nickel-based oxide, a lithium cobalt-based oxide, a lithium manganese-based oxide, a lithium iron phosphate-based compound, a cobalt-free lithium nickel-manganese-based oxide, an overlithiated layered oxide, or any combination thereof.

The positive electrode active material according to one or more embodiments may include a lithium nickel-based oxide having a nickel content (e.g., amount) of about 80 mol% or more, or about 90 mol% or more, based on a total moles, 100 mol%, of metals excluding lithium, included in the lithium nickel-based oxide. The high-nickel-based layered positive electrode active material has the advantage of realizing high capacity and high energy density. However, the higher the nickel content (e.g., amount), the easier it is for the lithium inside the active material to be eluted due to the reduction of Ni³⁺ to Ni²⁺ on the surface of the positive electrode active material, and a lithium compound is formed on the surface, increasing resistance. As a result, the binder is deformed and the positive electrode composition is gelled, reducing the processability. In contrast, if (e.g., when) applying a metal oxide and an organic acid according to one or more embodiments while applying a high nickel-based positive electrode active material, the elution of lithium inside the positive electrode active material is suppressed or reduced, the formation of additional lithium compounds is prevented or reduced, and binder deformation is suppressed or reduced, thereby effectively preventing or reducing gelation of the positive electrode composition. As a result, high capacity and high energy density may be achieved while preventing or reducing capacity deterioration and improving processability.

In one or more embodiments, the positive electrode active material may include, for example, a compound represented by Chemical Formula 1.

**Chemical Formula 1** **Liₐ₁Niₓ₁M¹_{y1}M²_{z1}O_{2-b1}X_{b1}**

In Chemical Formula 1, 0.9≤a1≤1.8, 0.8≤x1≤1, 0≤y1≤0.2, 0≤z1≤0.2, 0.9≤ x1+y1+z1≤1.1, and 0≤b1≤0.1, M¹ and M² may each independently be one or more elements selected from among aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), and zirconium (Zr), and X may be one or more elements selected from among fluorine (F), phosphorous (P), and sulfur (S).

In some embodiments, in Chemical Formula 1, 0.85≤x1≤1, 0≤y1≤0.15, 0≤ z1≤0.15; 0.9≤x1≤1, 0≤y1≤0.1, 0≤z1≤0.1; or 0.91≤x1<1, 0<y1≤0.09, and 0≤z1≤0.09.

In some embodiments, the positive electrode active material may include a lithium nickel cobalt-based composite oxide represented by Chemical Formula 2.

**Chemical Formula 2** **Liₐ₂Niₓ₂CO_{y2}M³_{z2}O_{2-b2}X_{b2}**

In Chemical Formula 2, 0.9≤a2≤1.8, 0.8≤x2<1, 0<y2≤0.2, 0≤z2≤0.2, 0.9≤ x2+y2+z2≤1.1, and 0≤b2≤0.1, M³ may be one or more elements selected from among Al, B, Ba, Ca, Ce, Cr, Cu, Fe, Mg, Mn, Mo, Nb, Si, Sr, Ti, V, W, and Zr, and X may be one or more elements selected from among F, P, and S.

In some embodiments, in Chemical Formula 2, 0.9≤x2≤0.99, 0.01≤y2≤0.1, and 0.01≤z2≤0.1.

In some embodiments, the positive electrode active material may include a lithium nickel-based composite oxide represented by Chemical Formula 3. The compound of Chemical Formula 3 may be referred to as a lithium nickel-cobalt-aluminium oxide or a lithium nickel-cobalt-manganese oxide.

**Chemical Formula 3** **Liₐ₃Niₓ₃Co_{y3}M⁴_{z3}M⁵_{w3}O_{2-b3}X_{b3}**

In Chemical Formula 3, 0.9≤a3≤1.8, 0.8≤x3≤0.98, 0.01≤y3≤0.19, 0.01≤z3≤ 0.19, 0≤w3≤0.19, 0.9≤x3+y3+z3+w3≤1.1, and 0≤b3≤0.1, M⁴ may be one or more elements selected from among Al and Mn, M⁵ may be one or more elements selected from among B, Ba, Ca, Ce, Cr, Cu, Fe, Mg, Mo, Nb, Si, Sr, Ti, V, W, and Zr, and X may be one or more elements selected from among F, P, and S.

In some embodiments, in Chemical Formula 3, 0.9≤x3≤0.98, 0.01≤y3≤0.09, 0.01≤z3≤0.09, and 0≤w3≤0.09.

The positive electrode active material may be in the form of particles, for example, it may be in the form of secondary particles in which (e.g., in each of which) a plurality of primary particles are agglomerated, or it may be in the form of single particles (e.g., each being a monolithic particle).

An average particle diameter (D₅₀) of (the particles of) the positive electrode active material according to one or more embodiments is not particularly limited, but may be, for example, about 1 µm to about 20 µm, about 3 µm to about 18 µm, or about 5 µm to about 15 µm. The average particle diameter refers to a diameter (D₅₀) of particles having a cumulative volume of 50 volume% in the particle size distribution that is obtained by measuring the size (diameter or length of the major axis) of about 20 particles at random in a scanning electron microscope image for a positive electrode active material.

### Binder

The binder according to one or more embodiments may be a fluorine-based binder. The fluorine-based binder is advantageous for achieving high energy density by strongly adhering the positive electrode active material. However, the fluorine-based binder may be easily deformed due to residual lithium compounds formed on the surface of the positive electrode active material, and the modified/deformed fluorine-based binder has a deleterious effect of causing agglomeration and gelation of the positive electrode composition. However, if (e.g., when) the metal oxide and the organic acid according to one or more embodiments are utilized together with the fluorine-based binder, the pH (pH level) is adjusted to suppress or reduce binder deformation, and the formation of additional lithium compounds is suppressed or reduced, thereby additionally preventing or reducing binder deformation, and effectively suppressing gelation of the positive electrode composition.

The fluorine-based binders may include, for example, polyvinylidene fluoride (PVdF), a polyvinylidene fluoride-hexafluoropropylene (PVdF-HFP) copolymer, a polyvinylidene fluoride-trichloroethylene (PVdF-TCE) copolymer, polytetrafluoroethylene (PTFE), polytrifluoroethylene (PTrFE), polychlorotrifluoroethylene (CTFE), polyhexafluoropropylene, hexafluoroisobutylene, or any combination thereof.

In one or more embodiments, the binder may be included in an amount of about 0.1 wt% to about 3 wt%, for example, about 0.1 wt% to about 2 wt%, or about 0.5 wt% to about 1.5 wt%, based on a total weight, 100 wt%, of the positive electrode composition. If (e.g., when) the binder content (e.g., amount) satisfies the above range, energy density may be increased and durability may be improved by increasing a binding force of the positive electrode active material without adversely affecting the positive electrode.

### Conductive Material

The positive electrode composition according to one or more embodiments may further include a conductive material. The conductive material may include, for example, a carbon-based material such as natural graphite, artificial graphite, carbon black, acetylene black, Ketjen black, a carbon fiber, a carbon nanofiber, and/or carbon nanotube; a metal-based material containing copper, nickel, aluminium, silver, etc., in a form of a metal powder or a metal fiber; a conductive polymer such as a polyphenylene derivative; or any mixture thereof.

In one or more embodiments, the conductive material may be included in an amount of about 0.1 wt% to about 2 wt%, for example, about 0.1 wt% to about 1 wt%, or about 0.3 wt% to about 0.8 wt%, based on a total weight, 100 wt%, of the positive electrode composition. If (e.g., when) the content (e.g., amount) of the conductive material satisfies the above range, electronic conductivity may be increased without adversely affecting the positive electrode.

For example, in one or more embodiments, based on a total weight, 100 wt%, of the positive electrode composition, the positive electrode active material may be included in an amount of about 93.5 wt% to about 99.88 wt%, the metal oxide may be included in an amount of about 0.01 wt% to about 0.5 wt%, the organic acid may be included in an amount of about 0.01 wt% to about 1 wt%, and the binder may be included in an amount of about 0.1 wt% to about 3 wt%.

For example, in one or more embodiments, based on a total weight, 100 wt%, of the positive electrode composition, the positive electrode active material may be included in an amount of about 93.5 wt% to about 99.78 wt%, the metal oxide may be included in an amount of about 0.01 wt% to about 0.5 wt%, the organic acid may be included in an amount of about 0.01 wt% to about 1 wt%, the binder may be included in an amount of about 0.1 wt% to about 3 wt%, and the conductive material may be included in an amount of about 0.1 wt% to about 2 wt%.

### Positive Electrode

In one or more embodiments, a positive electrode for a rechargeable lithium battery includes a positive electrode current collector and a positive electrode active material layer on the positive electrode current collector, wherein the positive electrode active material layer includes a positive electrode active material, a binder, a metal oxide having an oxidation number of 4 or higher, and an organic acid. The positive electrode may be formed through the above-described positive electrode composition.

The positive electrode current collector may be aluminium, stainless steel (SUS), etc., but embodiments of the present disclosure are not limited thereto.

Descriptions of the positive electrode active material, the binder, the metal oxide having an oxidation number of 4 or higher, and the organic acid may each independently be the same as described above and are therefore omitted for conciseness.

The metal oxide may be included in an amount of about 0.01 wt% to about 0.5 wt%, for example, about 0.01 wt% to about 0.4 wt%, about 0.01 wt% to about 0.3 wt%, about 0.01 wt% to about 0.2 wt%, about 0.01 wt% to about 0.1 wt%, about 0.01 wt% to about 0.09 wt%, about 0.02 wt% to about 0.5 wt%, about 0.03 wt% to about 0.5 wt%, about 0.04 wt% to about 0.5 wt%, or about 0.05 wt% to about 0.5 wt%, based on a total weight, 100 wt%, of the positive electrode active material layer.

The organic acid may be included in an amount of about 0.01 wt% to about 1 wt%, for example, about 0.01 wt% to about 0.9 wt%, about 0.01 wt% to about 0.7 wt%, about 0.01 wt% to about 0.5 wt%, about 0.01 wt% to about 0.3 wt%, about 0.01 wt% to about 0.1 wt%, about 0.05 wt% to about 1 wt%, or about 0.1 wt% to about 1 wt%, based on a total weight, 100 wt%, of the positive electrode active material layer.

The binder may be included in an amount of about 0.1 wt% to about 3 wt%, for example, about 0.1 wt% to about 2 wt%, or about 0.5 wt% to about 1.5 wt%, based on a total weight, 100 wt%, of the positive electrode active material layer.

In one or more embodiments, the positive electrode active material layer may further include a conductive material, and the conductive material may be included in an amount of about 0.1 wt% to about 2 wt%, for example, about 0.1 wt% to about 1 wt%, or about 0.3 wt% to about 0.8 wt%, based on a total weight, 100 wt%, of the positive electrode active material layer.

### Rechargeable Lithium Battery

According to one or more embodiments, a rechargeable lithium battery includes the aforementioned positive electrode, a negative electrode, and an electrolyte.

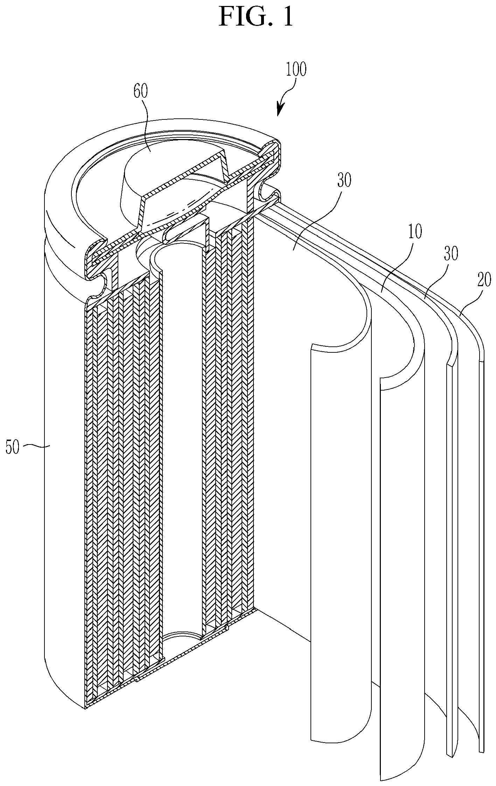

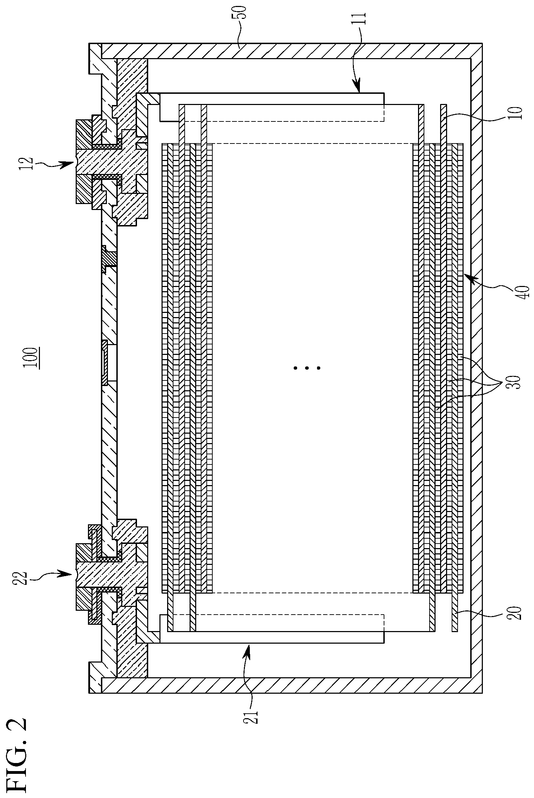

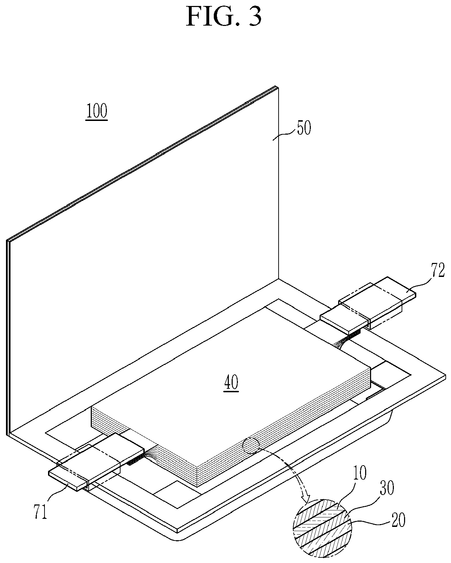

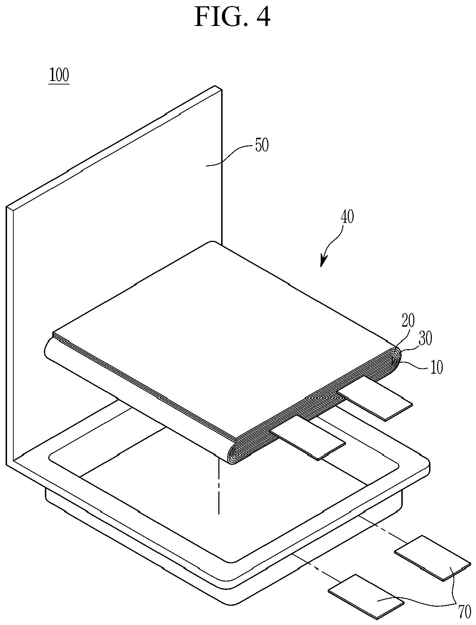

The rechargeable lithium battery may be classified into cylindrical, prismatic, pouch, coin, and/or the like depending on their shape. FIGs. 1 to 4 are each a schematic view illustrating a rechargeable lithium battery according to one or more embodiments. FIG. 1 shows a cylindrical battery, FIG. 2 shows a prismatic battery, and FIG. 3 and FIG. 4 show pouch-type or kind batteries. Referring to FIGs. 1 to 4, a rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In some embodiments, the rechargeable lithium battery 100 may include a sealing member 60 sealing the case 50 as shown in FIG. 1. In some embodiments, as shown in FIG. 2, the rechargeable lithium battery 100 may include a positive lead tab 11, a positive terminal 12, a negative lead tab 21, and a negative terminal 22. In some embodiments, as shown in FIG. 3 and FIG. 4, the rechargeable lithium battery 100 may include an electrode tab 70, that is, a positive electrode tab 71 and a negative electrode tab 72, serving as an electrical path for inducing the current formed in the electrode assembly 40 to the outside.

The rechargeable lithium battery according to one or more embodiments may be capable of being driven at a high voltage, or may be suitable for being driven at a high voltage. For example, the driving voltage of the rechargeable lithium battery may be about 4.3 V to about 4.6 V, or about 4.40 V to about 4.55 V. By applying the positive electrode active material according to one or more embodiments, the rechargeable lithium battery may significantly reduce an amount of gas generated even when driven at high voltage and may achieve high capacity and long cycle-life characteristics.

### Negative Electrode

The negative electrode may include a negative electrode current collector and a negative electrode active material layer on the negative electrode current collector, and the negative electrode active material layer may include a negative electrode active material, a binder, a conductive material, or any combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, for example, crystalline carbon, amorphous carbon, or any combination thereof. The crystalline carbon may be graphite such as irregular-shaped, sheet-shaped, flake-shaped, sphere-shaped, or fiber-shaped natural graphite or artificial graphite, and the amorphous carbon may be a soft carbon, a hard carbon, a mesophase pitch carbonization product, calcined coke, and/or the like.

The lithium metal alloy may include an alloy of lithium and at least one metal selected from among sodium (Na), potassium (K), rubidium (Rb), cesium (Cs), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, and any combination thereof, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorous (P), arsenic (As), antimony (Sb), bismuth (Bi), sulfur (S), selenium (Se), tellurium (Te), polonium (Po), and any combination thereof), or any combination thereof. The Sn-based negative electrode active material may include Sn, SnOₓ (0<x≤2), a Sn alloy, or any combination thereof.

The silicon-carbon composite may be a composite of silicon and amorphous carbon. An average particle diameter (D₅₀) of the silicon-carbon composite particle may be, for example, about 0.5 µm to about 20 µm. According to one or more embodiments, the silicon-carbon composite may be in a form of silicon particles and amorphous carbon coated on the surface of the silicon particles. For example, in some embodiments, the silicon-carbon composite may include a secondary particle (core) in which primary silicon particles are assembled (e.g., agglomerated), and an amorphous carbon coating layer (shell) on the surface of the secondary particle. In some embodiments, the amorphous carbon may also be between the primary silicon particles, and, for example, the primary silicon particles may be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on a surface of the core. The crystalline carbon may be artificial graphite, natural graphite, or any combination thereof. The amorphous carbon may be soft carbon or hard carbon, a mesophase pitch carbonized product, calcined coke, and/or the like.

If (e.g., when) the silicon-carbon composite includes silicon and amorphous carbon, a content (e.g., amount) of silicon may be about 10 wt% to about 50 wt%, and a content (e.g., amount) of amorphous carbon may be about 50 wt% to about 90 wt%, based on a total weight, 100 wt%, of the silicon-carbon composite. In some embodiments, if (e.g., when) the silicon-carbon composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt%, based on a total weight, 100 wt%, of the silicon-carbon composite.

In one or more embodiments, a thickness of an amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x<2). In this regard, an atomic content (e.g., amount) ratio of Si:O, which indicates a degree of oxidation, may be about 99:1 to about 33:67. As utilized herein, when a definition is not otherwise provided, an average particle diameter (D₅₀) indicates a particle where an accumulated volume is about 50 volume% in a particle distribution.

The Si-based negative electrode active material or the Sn-based negative electrode active material may be utilized in combination with a carbon-based negative electrode active material. If (e.g., when) the Si-based negative electrode active material or Sn-based negative electrode active material and the carbon-based negative electrode active material are mixed and utilized, a mixing ratio may be a weight ratio of about 1:99 to about 90:10.

### Binder

The binder serves to suitably and/or well attach the negative electrode active material particles to each other and also to suitably and/or well attach the negative electrode active material to the negative electrode current collector. The binder may include a non-aqueous binder, an aqueous binder (e.g., a water-soluble binder), a dry binder, or any combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or any combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and any combination thereof.

If (e.g., when) an aqueous binder is utilized as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous, and may be, for example, polytetrafluoroethylene, polyvinylidene fluoride, a polyvinylidene fluoride-hexafluoropropylene copolymer, polyethylene oxide, or any combination thereof.

### Conductive Material

The conductive material may be utilized to impart conductivity to the electrode, and any material that does not cause chemical change and conducts electrons may be utilized in the battery. Non-limiting examples thereof may include a carbon-based material such as natural graphite, artificial graphite, carbon black, acetylene black, Ketjen black, a carbon fiber, a carbon nanofiber, and/or a carbon nanotube; a metal-based material including copper, nickel, aluminium, silver, etc. in a form of a metal powder or a metal fiber; a conductive polymer such as a polyphenylene derivative; or any mixture thereof.

In one or more embodiments, a content (e.g., amount) of the negative electrode active material may be about 95 wt% to about 99.5 wt% based on a total weight, 100 wt%, of the negative electrode active material layer, and a content (e.g., amount) of the binder may be about 0.5 wt% to about 5 wt% based on a total weight, 100 wt%, of the negative electrode active material layer. For example, in some embodiments, the negative electrode active material layer may include about 90 wt% to about 99 wt% of the negative electrode active material, about 0.5 wt% to about 5 wt% of the binder, and about 0.5 wt% to about 5 wt% of the conductive material.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

In one or more embodiments, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or any combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond) and/or the like; amides such as dimethylformamide; dioxolanes such as 1,3-dioxolane, 1,4-dioxolane, and/or the like; sulfolanes; and/or the like.

The non-aqueous organic solvent may be utilized alone or in a mixture of two or more types (kinds), and if (e.g., when) two or more types (kinds) are utilized in a mixture, a mixing ratio may be appropriately adjusted according to the desired or suitable battery performance, which is widely suitable to those working in the field.

If (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in some embodiments, a carbonate-based solvent and an aromatic hydrocarbon-based organic solvent may be mixed and utilized in a volume ratio of about 1:1 to about 30:1.

In one or more embodiments, the electrolyte may further include vinylethyl carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a rechargeable lithium battery, enables a basic operation of the rechargeable lithium battery, and improves transportation of the lithium ions between positive and negative electrodes. Non-limiting examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂), x and y are each an integer of 1 to 20, lithium trifluoromethane sulfonate, lithium tetrafluoroethane sulfonate, lithium difluorobis(oxalato)phosphate (LiDFOB), and lithium bis(oxalato) borate (LiBOB).

A concentration of lithium salt may be within the range of about 0.1 M to about 2.0 M. If (e.g., when) the concentration of lithium salt is within the above range, the electrolyte has appropriate or suitable ionic conductivity and viscosity, and thus excellent or suitable performance may be achieved and lithium ions may move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or any combination thereof on one or both (e.g., simultaneously) surfaces of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or any copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and/or a structural unit derived from (meth)acrylamido sulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and any combination thereof, but embodiments of the present disclosure are not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described in more detail herein. However, the following examples are mere examples of the present disclosure, and the present disclosure is not limited to the following examples.

### Example 1

### 1. Manufacture of Positive Electrode

A positive electrode composition was prepared by mixing 98.15 wt% of a positive electrode active material (LiNi_{0.915}Co_{0.07}Al_{0.015}O₂), 0.5 wt% of a carbon nanotube conductive material, 1.2 wt% of a polyvinylidene fluoride binder, 0.1 wt% of oxalic acid, and 0.05 wt% of WOs in an N-methyl-2-pyrrolidone (NMP) solvent. A solid content (e.g., amount) thereof was about 75.5%. The prepared positive electrode composition was coated on an aluminium foil current collector and then, dried and pressed to manufacture a positive electrode.

### 2. Manufacturing of Rechargeable Lithium Battery Cell

97.5 wt% of a graphite negative electrode active material, 1.5 wt% of carboxymethyl cellulose, and 1 wt% of a styrene butadiene rubber in a water solvent were utilized to prepare a negative electrode active material layer slurry. The negative electrode active material layer slurry was coated on a copper foil current collector and then, dried and compressed to manufacture a negative electrode.

A polytetrafluoroethylene separator was utilized, and an electrolyte prepared by dissolving 1 M LiPF₆ in a mixed solvent of ethylene carbonate and dimethyl carbonate in a volume ratio of 3:7 was utilized to manufacture a rechargeable lithium battery cell in a common method.

### Example 2

A positive electrode and a rechargeable lithium battery cell were each manufactured substantially in the same manner as in Example 1 except that the positive electrode composition was prepared by utilizing MoOs instead of WOs.

### Example 3

A positive electrode and a rechargeable lithium battery cell were each manufactured substantially in the same manner as in Example 1 except that the positive electrode composition was prepared by utilizing V₂O₅ instead of WOs.

### Example 4

A positive electrode and a rechargeable lithium battery cell were each manufactured substantially in the same manner as in Example 1 except that the positive electrode composition was prepared by utilizing KMnO₄ instead of WOs.

### Example 5

A positive electrode and a rechargeable lithium battery cell were each manufactured substantially in the same manner as in Example 1 except that the positive electrode composition was prepared by utilizing SiO₂ instead of WOs.

### Comparative Example 1

A positive electrode and a rechargeable lithium battery cell were each manufactured substantially in the same manner as in Example 1 except that the positive electrode composition was prepared by utilizing 98.2 wt% of the positive electrode active material, 0.5 wt% of the conductive material, 1.2 wt% of the binder, and 0.1 wt% of oxalic acid without adding WOs.

### Comparative Example 2

A positive electrode and a rechargeable lithium battery cell were each manufactured substantially in the same manner as in Example 1 except that the positive electrode composition was prepared by mixing 98.15 wt% of the positive electrode active material, 0.5 wt% of the conductive material, 1.2 wt% of the binder, and 0.15 wt% of oxalic acid without adding WOs.

### Comparative Example 3

A positive electrode and a rechargeable lithium battery cell were each manufactured substantially in the same manner as in Example 1 except that the positive electrode composition was prepared by mixing 98.25 wt% of the positive electrode active material, 0.5 wt% of the conductive material, 1.2 wt% of the binder, and 0.05 wt% of WOs without adding the oxalic acid.

For convenience of understanding, designs of the positive electrode compositions according to the examples and the comparative examples are briefly shown in Table 1.

**(Table 1)**

| | Positive electrode active material (wt%) | Conductive material (wt%) | Binder (wt%) | Oxalic acid (wt%) | Type of additives | Content of additives (wt%) |
|---|---|---|---|---|---|---|
| Example 1 | 98.15 | 0.5 | 1.2 | 0.1 | WO₃ | 0.05 |
| Example 2 | 98.15 | 0.5 | 1.2 | 0.1 | MoOs | 0.05 |
| Example 3 | 98.15 | 0.5 | 1.2 | 0.1 | V₂O₅ | 0.05 |
| Example 4 | 98.15 | 0.5 | 1.2 | 0.1 | KMnO₄ | 0.05 |
| Example 5 | 98.15 | 0.5 | 1.2 | 0.1 | SiO₂ | 0.05 |
| Comparative Example 1 | 98.2 | 0.5 | 1.2 | 0.1 | - | - |
| Comparative Example 2 | 98.15 | 0.5 | 1.2 | 0.15 | - | - |
| Comparative Example 3 | 98.25 | 0.5 | 1.2 | - | WO₃ | 0.05 |

### Evaluation Example 1: Evaluation of viscosity change during atmospheric storage of positive electrode composition

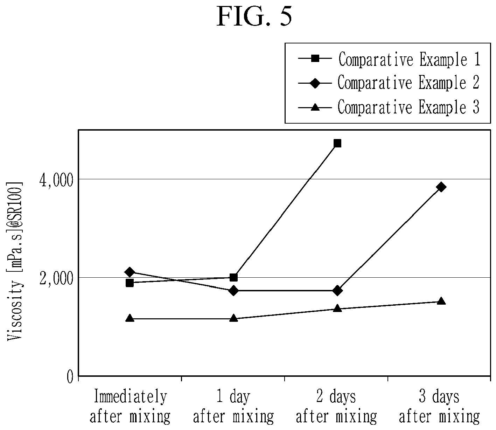

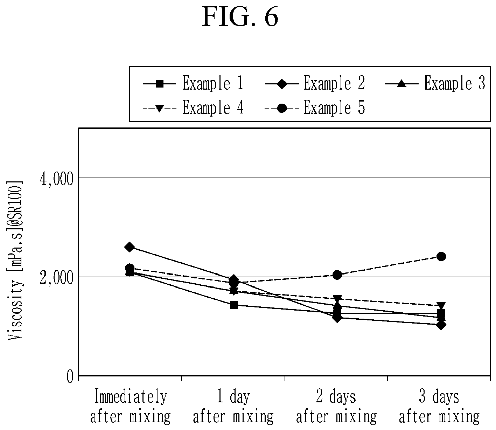

The positive electrode compositions according to Examples 1 to 5 and Comparative Examples 1 to 3 were each measured with respect to viscosity changes, while stored in the air for 3 days, and the results are shown in Table 2 and FIG. 5 and FIG. 6. The viscosity was measured at 25 °C by utilizing a viscosity meter (Anton Paar, MCR 302e). In Table 2, a unit of the viscosity is mPa.s.

**(Table 2)**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Immediately after mixing | 2110 | 2580 | 2090 | 2060 | 2160 | 1910 | 2080 | 1165 |
| 1 day later | 1460 | 1960 | 1720 | 1720 | 1880 | 1990 | 1730 | 1156 |
| 2 days later | 1280 | 1210 | 1440 | 1560 | 2030 | 4720 | 1720 | 1357 |
| 3 days later | 1240 | 1050 | 1180 | 1410 | 2410 | - | 3880 | 1499 |

Referring to Table 2 and FIG. 5 and FIG. 6, each of Comparative Examples 1 and 2 to which an organic acid alone without a metal oxide was added and Comparative Example 3 to which the metal oxide alone without the organic acid was added exhibited extremely increased viscosity, as each of the positive electrode composition started to be gelled due to binder denaturation, while being left. Comparative Example 1 exhibited that viscosity was sharply increased after 2 days and thus immeasurable at the 3^{rd} day, and Comparative Example 2 exhibited that viscosity was sharply increased after 3 days. In Comparative Example 3, shear thickening occurred after 2 days. On the other hand, Examples 1 to 5, to which metal oxide and organic acid were concurrently (e.g., simultaneously) added, each exhibited no viscosity increase even after being left for 3 days and thus effectively suppressed or reduced gelation of slurry. In particular, Examples 1 to 4, to which a metal oxide with a high valent of 5 or more was added, each exhibited much larger slurry gelation suppression effects.

### Evaluation Example 2: Evaluation of capacity degradation

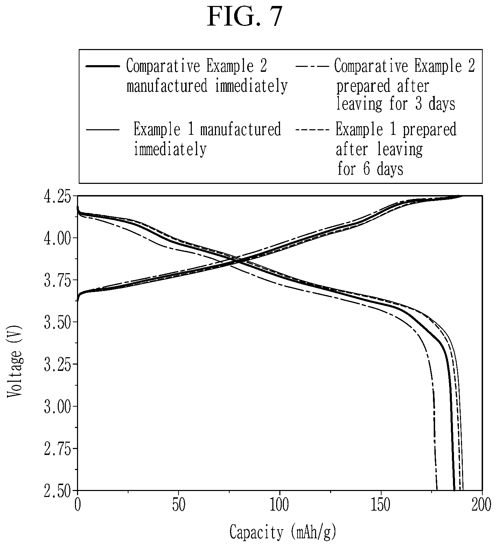

Cells were respectively manufactured immediately after preparing each of the positive electrode compositions of Example 1 and Comparative Example 2, after leaving each of the positive electrode compositions for 3 days, and after leaving each of the positive electrode compositions for 6 days and then, respectively checked with respect to capacity, and resulting graphs of capacity changes according to a voltage are shown in FIG. 7.

Referring to FIG. 7, discharge capacity of Comparative Example 2 decreased from 187.4 mAh/g to 178.6 mAh/g by about 4.7%, when the positive electrode composition being left for 3 days, compared with immediately after preparing the positive electrode composition. In contrast, discharge capacity of Example 1 decreased from 191.6 mAh/g to 190.5 mAh/g by about 0.6%, when the positive electrode composition being left for 6 days, compared with immediately after preparing the positive electrode composition.

### Evaluation Example 3: XRD peak comparison and pH change comparison

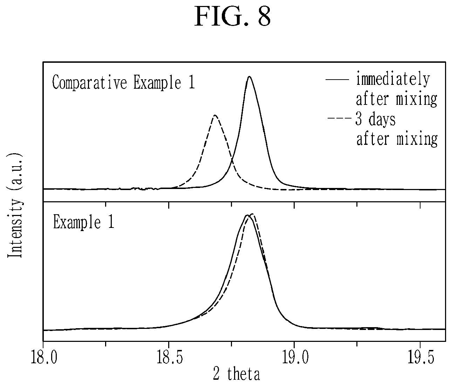

Each of the positive electrode compositions according to Example 1 and Comparative Example 1 were compared with respect to changes of a (003) phase peak through X-ray diffraction analysis immediately after preparing the compositions and after leaving them for 3 days, and the results are shown in FIG. 8. Referring to FIG. 8, Comparative Example 1, unlike Example 1, exhibited that the (003) phase peak shifted to the left after leaving it for 3 days, which confirmed that lithium inside the positive electrode active material was eluted, but when organic acid alone was applied, there was no internal lithium elution suppression effect from the positive electrode active material.

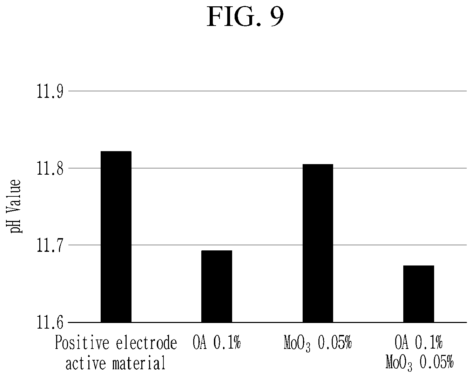

In addition, pH changes according to addition of organic acid or metal oxide to the positive electrode active materials were measured during the manufacturing process of the positive electrode compositions, and the results are shown in FIG. 9. FIG. 9 shows pH first measured when a positive electrode active material alone was added and then, pH measured when 0.1 wt% of oxalic acid (OA) alone was added in Comparative Example 1. In addition, FIG. 9 shows pH measured when 0.05 wt% of MoOs alone without organic acid was added and pH measured when 0.1 wt% of oxalic acid and 0.05 wt% of MoOs were added as in Example 2. Referring to FIG. 9, when the metal oxide alone was added, there was an insignificant pH decrease effect, which confirmed that the metal oxide alone had no effect of removing residual lithium compound on the positive electrode active material surface. Accordingly, in order to improve processability and reliability, the organic acid capable of removing the residual lithium compound on the positive electrode active material surface to reduce pH should be utilized concurrently (e.g., simultaneously) with the metal oxide capable of preventing or reducing internal lithium elution from a positive electrode active material.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While the present disclosure has been described in connection with what is presently considered to be practical example embodiments, it is to be understood that the present disclosure is not limited to the disclosed embodiments. In contrast, it is intended to cover one or more suitable modifications and equivalent arrangements included within the scope of the appended claims and equivalents thereof.

**Reference Numerals**

| | | | |
|---|---|---|---|
| 100 : | rechargeable lithium battery | 10 : | positive electrode |
| 11 : | positive electrode lead tab | 12 : | positive terminal |
| 20 : | negative electrode | 21 : | negative electrode lead tab |
| 22 : | negative terminal | 30 : | separator |
| 40 : | electrode assembly | 50 : | case |
| 60 : | sealing member | 70 : | electrode tab |
| 71 : | positive electrode tab | 72 : | negative electrode tab |

Embodiments are set out in the following clauses:
1. A positive electrode composition for a rechargeable lithium battery, the positive electrode composition comprising:
   a positive electrode active material;
   a binder;
   a metal oxide having an oxidation number of 4 or higher; and
   an organic acid.
Clause 2. The positive electrode composition of clause 1, wherein
   the metal oxide comprises MoOs, V₂O₅, WOs, KMnO₄, Nb₂O₅, Sb₂O₅, As₂O₅, SiO₂, MnO₂, SnO₂, ZnO₂, MoO₂, RuO₂, TiO₂, or any combination thereof.
Clause 3. The positive electrode composition of clause 1 or clause 2, wherein
   the metal oxide is a metal oxide having an oxidation number of 5 or higher.
Clause 4. The positive electrode composition of any one of clauses 1 to 3, wherein
   the metal oxide is in an amount of about 0.01 wt% to about 0.5 wt% based on a total weight, 100 wt%, of the positive electrode composition.
Clause 5. The positive electrode composition of any one of clauses 1 to 4, wherein
   the organic acid comprises formic acid, acetic acid, propionic acid, butyric acid, valeric acid, caproic acid, pelargonic acid, capric acid, caprylic acid, lauric acid, myristic acid, palmitic acid, stearic acid, fluoroacetic acid, trifluoroacetic acid, chloroacetic acid, dichloroacetic acid, bromoacetic acid, iodoacetic acid, hydroxyacetic acid, methoxyacetic acid, cyanoacetic acid, 2-chlorobutanoic acid, 3-chlorobutanoic acid, 3-butenoic acid, oxalic acid, malonic acid, succinic acid, glutaric acid, adipic acid, pimelic acid, suberic acid, azelaic acid, sebacic acid, maleic acid, fumaric acid, or any combination thereof.
Clause 6. The positive electrode composition of any one of clauses 1 to 5, wherein
   the organic acid is in an amount of about 0.01 wt% to about 1 wt% based on a total weight, 100 wt%, of the positive electrode composition.
Clause 7. The positive electrode composition of any one of clauses 1 to 6, wherein
   a weight ratio of the metal oxide to the organic acid is about 1:1 to about 1:10.
Clause 8. The positive electrode composition of any one of clauses 1 to 7, wherein
   the positive electrode active material comprises a lithium nickel-based oxide, a lithium cobalt-based oxide, a lithium manganese-based oxide, a lithium iron phosphate-based compound, a cobalt-free lithium nickel-manganese-based oxide, an overlithiated layered oxide, or any combination thereof.
Clause 9. The positive electrode composition of any one of clauses 1 to 8, wherein
   the positive electrode active material comprises a lithium nickel-based oxide having a nickel amount of about 80 mol% or more based on a total moles, 100 mol%, of metals excluding lithium, in the lithium nickel-based oxide.
Clause 10. The positive electrode composition of any one of clauses 1 to 9, wherein
   the positive electrode active material comprises a compound represented by Chemical Formula 1:

   **Chemical Formula 1** **Liₐ₁Niₓ₁M¹_{y1}M²_{z1}O_{2-b1}X_{b1}**

   wherein, in Chemical Formula 1, 0.9≤a1≤1.8, 0.8≤x1≤1, 0≤y1≤0.2, 0≤z1≤0.2, 0.9≤x1+y1+z1< 1.1, and 0≤b1≤0.1, M¹ and M² are each independently one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S.
Clause 11. The positive electrode composition of clause 10, wherein
   0.91≤x1<1, 0<y1≤0.09, and 0≤z1≤0.09.
Clause 12. The positive electrode composition of any one of clauses 1 to 11, wherein
   the binder comprises a fluorine-based binder.
Clause 13. The positive electrode composition of any one of clauses 1 to 12, wherein
   based on a total weight, 100 wt%, of the positive electrode composition,
   the positive electrode active material is in an amount of about 93.5 wt% to about 99.88 wt%,
   the metal oxide is in an amount of about 0.01 wt% to about 0.5 wt%,
   the organic acid is in an amount of about 0.01 wt% to about 1 wt%, and
   the binder is in an amount of about 0.1 wt% to about 3 wt%.
Clause 14. A positive electrode for a rechargeable lithium battery, the positive electrode comprising:
   a positive electrode current collector; and
   a positive electrode active material layer on the positive electrode current collector,
   wherein the positive electrode active material layer comprises a positive electrode active material, a binder, a metal oxide having an oxidation number of 4 or higher, and an organic acid.
Clause 15. The positive electrode of clause 14, wherein
   the metal oxide comprises MoOs, V₂O₅, WOs, KMnO₄, Nb₂O₅, Sb₂O₅, As₂O₅, SiO₂, or any combination thereof.
Clause 16. The positive electrode of clause 14 or clause 15, wherein
   the metal oxide is a metal oxide having an oxidation number of 5 or higher.
Clause 17. The positive electrode of any one of clauses 14 to 16, wherein
   the metal oxide is in an amount of about 0.01 wt% to about 0.5 wt% based on a total weight, 100 wt%, of the positive electrode active material layer.
Clause 18. The positive electrode of any one of clauses 14 to 17, wherein
   the organic acid comprises formic acid, acetic acid, propionic acid, butyric acid, valeric acid, caproic acid, pelargonic acid, capric acid, caprylic acid, lauric acid, myristic acid, palmitic acid, stearic acid, fluoroacetic acid, trifluoroacetic acid, chloroacetic acid, dichloroacetic acid, bromoacetic acid, iodoacetic acid, hydroxyacetic acid, methoxyacetic acid, cyanoacetic acid, 2-chlorobutanoic acid, 3-chlorobutanoic acid, 3-butenoic acid, oxalic acid, malonic acid, succinic acid, glutaric acid, adipic acid, pimelic acid, suberic acid, azelaic acid, sebacic acid, maleic acid, fumaric acid, or any combinations thereof.
Clause 19. The positive electrode of any one of clauses 14 to 18, wherein
   the organic acid is in an amount of about 0.01 wt% to about 1 wt% based on a total weight, 100 wt%, of the positive electrode active material layer.
Clause 20. The positive electrode of any one of clauses 14 to 19, wherein
   a weight ratio of the metal oxide to the organic acid is about 1:1 to about 1:10.
Clause 21. The positive electrode of any one of clauses 14 to 20, wherein
   the positive electrode active material comprises a lithium nickel-based oxide, a lithium cobalt-based oxide, a lithium manganese-based oxide, a lithium iron phosphate-based compound, a cobalt-free lithium nickel-manganese-based oxide, an overlithiated layered oxide, or any combination thereof.
Clause 22. The positive electrode of any one of clauses 14 to 21, wherein
   the positive electrode active material comprises a lithium nickel-based oxide having a nickel amount of about 80 mol% or more based on a total weight, 100 mol%, of metals excluding lithium, in the lithium nickel-based oxide.
Clause 23. The positive electrode of any one of clauses 14 to 22, wherein
   the positive electrode active material comprises a compound represented by Chemical Formula 1:

   **Chemical Formula 1** **Liₐ₁Niₓ₁M¹_{y1}M²_{z1}O_{2-b1}X_{b1}**

   wherein, in Chemical Formula 1, 0.9≤a1≤1.8, 0.8≤x1≤1, 0≤y1≤0.2, 0≤z1≤0.2, 0.9≤x1+y1+z1< 1.1, and 0≤b1≤0.1, M¹ and M² are each independently one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S.
Clause 24. The positive electrode of clause 23, wherein
   0.91≤x1<1, 0<y1≤0.09, and 0≤z1≤0.09.
Clause 25. The positive electrode of any one of clauses 14 to 24, wherein
   the binder comprises a fluorine-based binder.
Clause 26. The positive electrode of any one of clauses 14 to 25, wherein
   based on a total weight, 100 wt%, of the positive electrode active material layer,
   the positive electrode active material is in an amount of about 93.5 wt% to about 99.88 wt%,
   the metal oxide is in an amount of about 0.01 wt% to about 0.5 wt%,
   the organic acid is in an amount of about 0.01 wt% to about 1 wt%, and
   the binder is in an amount of about 0.1 wt% to about 3 wt%.
Clause 27. A rechargeable lithium battery, comprising:
   the positive electrode of any one of clauses 14 to 26;
   a negative electrode; and
   an electrolyte.

## Claims

1. A positive electrode composition for a rechargeable lithium battery, the positive electrode composition comprising:
a positive electrode active material;
a binder;
a metal oxide having an oxidation number of 4 or higher; and
an organic acid.

2. The positive electrode composition as claimed in claim 1, wherein
the metal oxide comprises MoOs, V₂O₅, WOs, KMnO₄, Nb₂O₅, Sb₂O₅, As₂O₅, SiO₂, MnO₂, SnO₂, ZnO₂, MoO₂, RuO₂, TiO₂, or any combination thereof.

3. The positive electrode composition as claimed in claim 1 or claim 2, wherein
the metal oxide is a metal oxide having an oxidation number of 5 or higher.

4. The positive electrode composition as claimed in any one of claims 1 to 3, wherein
the metal oxide is in an amount of about 0.01 wt% to about 0.5 wt% based on a total weight, 100 wt%, of the positive electrode composition.

5. The positive electrode composition as claimed in any one of claims 1 to 4, wherein
the organic acid comprises formic acid, acetic acid, propionic acid, butyric acid, valeric acid, caproic acid, pelargonic acid, capric acid, caprylic acid, lauric acid, myristic acid, palmitic acid, stearic acid, fluoroacetic acid, trifluoroacetic acid, chloroacetic acid, dichloroacetic acid, bromoacetic acid, iodoacetic acid, hydroxyacetic acid, methoxyacetic acid, cyanoacetic acid, 2-chlorobutanoic acid, 3-chlorobutanoic acid, 3-butenoic acid, oxalic acid, malonic acid, succinic acid, glutaric acid, adipic acid, pimelic acid, suberic acid, azelaic acid, sebacic acid, maleic acid, fumaric acid, or any combination thereof.

6. The positive electrode composition as claimed in any one of claims 1 to 5, wherein
the organic acid is in an amount of about 0.01 wt% to about 1 wt% based on a total weight, 100 wt%, of the positive electrode composition.

7. The positive electrode composition as claimed in any one of claims 1 to 6, wherein
a weight ratio of the metal oxide to the organic acid is about 1:1 to about 1:10.

8. The positive electrode composition as claimed in any one of claims 1 to 7, wherein
the positive electrode active material comprises a lithium nickel-based oxide, a lithium cobalt-based oxide, a lithium manganese-based oxide, a lithium iron phosphate-based compound, a cobalt-free lithium nickel-manganese-based oxide, an overlithiated layered oxide, or any combination thereof.

9. The positive electrode composition as claimed in any one of claims 1 to 8, wherein
the positive electrode active material comprises a lithium nickel-based oxide having a nickel amount of about 80 mol% or more based on a total moles, 100 mol%, of metals excluding lithium, in the lithium nickel-based oxide.

10. The positive electrode composition as claimed in any one of claims 1 to 9, wherein
the positive electrode active material comprises a compound represented by Chemical Formula 1:
**Chemical Formula 1** **Liₐ₁Niₓ₁M¹_{y1}M²_{z1}O_{2-b1}X_{b1}**
wherein, in Chemical Formula 1, 0.9≤a1≤1.8, 0.8≤x1≤1, 0≤y1≤0.2, 0≤z1≤0.2, 0.9≤x1+y1+z1< 1.1, and 0≤b1≤0.1, M¹ and M² are each independently one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S, optionally wherein
0.91≤x1<1, 0<y1≤0.09, and 0≤z1≤0.09.

11. The positive electrode composition as claimed in any one of claims 1 to 10, wherein
the binder comprises a fluorine-based binder.

12. The positive electrode composition as claimed in any one of claims 1 to 11, wherein
based on a total weight, 100 wt%, of the positive electrode composition,
the positive electrode active material is in an amount of about 93.5 wt% to about 99.88 wt%,
the metal oxide is in an amount of about 0.01 wt% to about 0.5 wt%,
the organic acid is in an amount of about 0.01 wt% to about 1 wt%, and
the binder is in an amount of about 0.1 wt% to about 3 wt%.

13. A positive electrode for a rechargeable lithium battery, the positive electrode comprising:
a positive electrode current collector; and
a positive electrode active material layer on the positive electrode current collector,
wherein the positive electrode active material layer comprises a positive electrode active material, a binder, a metal oxide having an oxidation number of 4 or higher, and an organic acid.

14. The positive electrode as claimed in claim 13, wherein:
(i) the metal oxide comprises MoOs, V₂O₅, WOs, KMnO₄, Nb₂O₅, Sb₂O₅, As₂O₅, SiO₂, or any combination thereof; and/or
(ii) the metal oxide is a metal oxide having an oxidation number of 5 or higher; and/or
(iii) the metal oxide is in an amount of about 0.01 wt% to about 0.5 wt% based on a total weight, 100 wt%, of the positive electrode active material layer; and/or
(iv) the organic acid comprises formic acid, acetic acid, propionic acid, butyric acid, valeric acid, caproic acid, pelargonic acid, capric acid, caprylic acid, lauric acid, myristic acid, palmitic acid, stearic acid, fluoroacetic acid, trifluoroacetic acid, chloroacetic acid, dichloroacetic acid, bromoacetic acid, iodoacetic acid, hydroxyacetic acid, methoxyacetic acid, cyanoacetic acid, 2-chlorobutanoic acid, 3-chlorobutanoic acid, 3-butenoic acid, oxalic acid, malonic acid, succinic acid, glutaric acid, adipic acid, pimelic acid, suberic acid, azelaic acid, sebacic acid, maleic acid, fumaric acid, or any combinations thereof; and/or
(v) the organic acid is in an amount of about 0.01 wt% to about 1 wt% based on a total weight, 100 wt%, of the positive electrode active material layer; and/or
(vi) a weight ratio of the metal oxide to the organic acid is about 1:1 to about 1:10; and/or
(vii) the positive electrode active material comprises a lithium nickel-based oxide, a lithium cobalt-based oxide, a lithium manganese-based oxide, a lithium iron phosphate-based compound, a cobalt-free lithium nickel-manganese-based oxide, an overlithiated layered oxide, or any combination thereof; and/or
(viii) the positive electrode active material comprises a lithium nickel-based oxide having a nickel amount of about 80 mol% or more based on a total weight, 100 mol%, of metals excluding lithium, in the lithium nickel-based oxide; and/or
(ix) the positive electrode active material comprises a compound represented by Chemical Formula 1:
**Chemical Formula 1** **Liₐ₁Niₓ₁M¹_{y1}M²_{z1}O_{2-b1}X_{b1}**
wherein, in Chemical Formula 1, 0.9≤a1≤1.8, 0.8≤x1≤1, 0≤y1≤0.2, 0≤z1≤0.2, 0.9≤x1+y1+z1< 1.1, and 0≤b1≤0.1, M¹ and M² are each independently one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S, optionally wherein 0.91≤x1<1, 0<y1≤0.09, and 0≤z1≤0.09; and/or
(x) the binder comprises a fluorine-based binder; and/or
(xi) based on a total weight, 100 wt%, of the positive electrode active material layer,
the positive electrode active material is in an amount of about 93.5 wt% to about 99.88 wt%,
the metal oxide is in an amount of about 0.01 wt% to about 0.5 wt%,
the organic acid is in an amount of about 0.01 wt% to about 1 wt%, and
the binder is in an amount of about 0.1 wt% to about 3 wt%.

15. A rechargeable lithium battery, comprising:
the positive electrode as claimed in claim 13 or claim 14;
a negative electrode; and
an electrolyte.
